# EUROPÄISCHE PATENTANMELDUNG

(11) **EP 0 629 582 A1**
(43) Veröffentlichungstag der Anmeldung: **21.12.1994**
(21) Anmeldenummer: 93109793.5
(22) Anmeldetag: 18.06.1993
(51) Int. Cl.: C02F 1/00

(54) **Vorrichtung zur Reinigung und Vitalisierung von Wässern**

(71) Anmelder: Schoeffmann, Walter, Ing.grad., D-80999 München (DE)
(72) Erfinder: Schoeffmann, Walter, Ing.grad., D-80999 München (DE)
(74) Vertreter: Kern, Wolfgang, Dipl.-Ing.

(57) **Zusammenfassung**

Mit Hilfe der erfindungsgemäßen Vorrichtung kann Wasser vitalisiert werden dadurch, daß in der von einem Rührwerk oder einer Pumpe aufgewirbelten Wasserströmung wenigstens ein den Energieinhalt des Wassers erhöhender, fester Kristall angeordnet ist, der ein Edelstein, Halbedelstein, Bergkristall oder auch ein Globuli ist. Die Verwirbelung des Wassers in Kombination mit Kristallen kann auch in durchströmten Armaturen erfolgen. Zur Behandlung von größeren Wassermengen ist die Hintereinanderschaltung von mehreren Reaktionskammern in einer mehrstufigen Pumpe oder die Serienschaltung mehrerer Pumpen mit dazwischen angeordneten Reaktionskammern zweckmäßig.

## Beschreibung

Die Erfindung betrifft eine Vorrichtung zur Reinigung und Vitalisierung von Wässern mit wenigstens einem mit dem zu behandelnden Wasser zu beschickenden Behälter, der mit einem Rührwerk oder einer Kreiselpumpe versehen ist, deren Rotor den Sauerstoffeintrag in das Wasser intensiviert sowie eine Vorrichtung zur Reinigung und Vitalisierung von Wässern innerhalb einer Wasserarmatur, deren Wasserauslauf mit einem Siebeinsatz versehen ist, ferner eine Vorrichrung zur Reinigung und Vitalisierung von Wässern mit wenigstens einem mit dem zu behandelnden Wasser zu beschickenden Behälter als Gehäuse einer mehrstufigen Kreiselpumpe, deren Laufräder den Sauerstoffeintrag in das Wasser intensivieren.

Die Qualität der verschiedenen Wässer, beispielsweise Grundwasser, Oberflächenwasser, Flußwasser, Quellwasser, das Wasser von Bergbächen, kennzeichnet sich nicht nur durch unterschiedliche Viskositäten, pH-Werte und biologische Reinheitsgrade, sondern auch durch unterschiedliche Energieinhalte und elektrische Ladungszustände. Man spricht in diesem Zusammenhang von der Struktur des Wassers im physikalischen Sinne und seinem Energiezustand, wobei letzterer durch eine Eigenschwingung gekennzeichnet ist, die wiederum vom Schwingungszustand der Wassermoleküle abhängt. Dieser Schwingungszustand ist ein Kennzeichen für die Vitalität des Wassers und damit auch für seine Reinheit und Bekömmlichkeit.

Das, was man bei Wässern gemeinhin mit "Frische" bezeichnet, wobei insbesondere an Gebirgsbäche gedacht ist, steht in unmittelbarem Zusammenhang mit dem Energie- bzw. Schwingungszustand des Wassers. Diese Schwingungsenergie ist bei Gebirgsbächen besonders groß. Im Gegensatz dazu sind "tote" Wässer außerordentlich energiearm und dementsprechend geringer bekömmlich, obgleich nicht in jedem Fall gesundheitsschädigend.

Die Aufgabe der Erfindung besteht nun darin, eine Vorrichtung der genannten Art zu entwickeln, mit der das Wasser auch in kleinen Mengen und deshalb in den Haushalten und gewissermaßen ganz individuell vitalisiert werden kann, und zwar ausgehend von beispielsweise Leitungswasser, das in aller Regel als "tot" im Sinne der obigen Definition anzusehen ist, und ferner eine Vorrichtung zu entwickeln, mit der ein größerer Bedarf an einem solchermaßen behandelten Wasser gedeckt werden kann.

Diese Aufgabe wird erfindungsgemäß dadurch gelöst, daß in der von dem Rührwerk im Behälter aufgewirbelten Wasserströmung wenigstens ein den Energieinhalt des Wassers erhöhender fester Kristallkörper angeordnet ist, der ein Edelstein oder Halbedelstein sein kann und in diesem Zusammenhang auch ein reiner, natürlicher Quarz, der entlang der primären Wachstumsachse geschliffen ist, beispielsweise ein Bergkristall, der an wenigstens einem seiner beiden Enden durch eine pyramidenförmige Spitze gekennzeichnet ist.

Das Kristallgitter eines solchen Kristalls schwingt in für dieses Gitter charakteristischen Amplituden und Frequenzen, und diese Schwingungen übertragen sich auf das die Kristalloberfläche umströmende Wasser, das auf diese

Weise vitalisiert oder energetisiert wird. Ein ähnlicher Effekt läßt sich, gemäß einer weiteren vorteilhaften Ausgestaltung der Erfindung erzielen, wenn Globuli, d.h. Zuckerkristalle, in geschlossenen Gefäßen zum Einsatz kommen. Es können auch ungeschliffene Naturkristalle und Edelsteine eingesetzt werden.

Es hat sich als vorteilhaft erwiesen, den festen Kristallkörper innerhalb des Behälters in einem in den Behälter einhängbaren Gefäß anzuordnen, dessen Wände wasserdurchlässig sind, wobei das Gefäß eine zylindrische Außenwand aufweisen kann sowie einen den festen Körper aufnehmenden Boden und eine diesem gegenüberliegende Öffnung zur Einführung des festen Körpers, deren Rand als Auflager zum Aufhängen des Gefäßes ausgebildet ist.

Die Wände des Gefäßes werden zur Aufnahme von Globuli wasserundurchlässig ausgeführt.

Zur weiteren Komplettierung der Vorrichtung dient gemäß einer anderen Ausgestaltung der Erfindung ein den Behälter verschließender, abnehmbarer Deckel, in dem sich eine Mittelöffnung befindet, deren flanschartig abgebogener Öffnungsrand als Auflager für den Rand des Gefäßes dient.

Eine solche Vorrichtung läßt sich zweckmäßigerweise dadurch verwirklichen, daß das Rührwerk und der Behälter Teil eines handelsüblichen Haushaltsmixgerätes sind und der Rotor des Rührwerks von einem im Fuße eines solchen Haushaltsmixgerätes angeordneten Elektromotor angetrieben wird.

Anstelle einer behälterartigen Vorrichtung mit einem eingebauten Rührwerk läßt dich aber die Reinigung und Vitalisierung eines Wassers auch innerhalb einer Wasserarmatur erreichen, deren Wasserauslauf mit einem Siebeinsatz versehen ist, wobei innerhalb des Auslaufrohres der Armatur und oberhalb des im Auslauf befindlichen Siebeinsatzes im Strömungsweg des Wassers wenigstens ein den Energieinhalt des Wassers erhöhender, fester Kristallkörper angeordnet ist.

Auch dieser Kristallkörper läßt sich wieder als Edelstein oder Halbedelstein ausführen, wobei sich für den Fall, daß der feste Kristallkörper ein reiner, natürlicher Quarz ist, der entlang der primären Wachstumsachse geschliffen ist, ein Bergkristall als besonders geeignet erwiesen hat, der Schliff eines solchen Kristalls aber auch pyramidenförmig sein kann und im übrigen auch Globuli zum Einsatz kommen können.

Der oder die Kristalle werden zweckmäßigerweise in einem Gehäuse angeordnet, das von einer wasserdurchlässigen oder im Falle von Globuli wasserundurchlässigen Haube abgedeckt ist.

Anstelle einer behälterartigen Vorrichtung mit eingebautem Rührwerk kann die Reinigung und Vitalisierung von größeren Wassermengen in einer mehrstufigen Pumpe mit zwischengeschalteten Reaktionskammern, d.h. Behältern mit eingebauten Gefäßen, zur Aufnahme von Kristallen realisiert werden.

Anstelle einer mehrstufigen Pumpe mit zwischengeschalteten Reaktionskammern ist auch die Serienschaltung von mehreren Pumpen mit dazwischen angeordneten Reaktionskammern zur Aufnahme von Kristallen möglich.

Die Erfindung wird nachfolgend an Hand der in der Zeichnung dargestellten Ausführungsbeispiele näher erläutert. In der Zeichnung zeigen:
- Fig. 1: eine teilweise längsgeschnittene Seitenansicht einer einem Haushaltsmixgerät ähnelnden Vorrichtung mit einem im Wasserbehandlungsbehälter angeordneten Gefäß mit einem speziell geschliffenen Bergkristall,
- Fig. 2: eine der Fig. 1 ähnliche Ausführungsform der erfindungsgemäßen Vorrichtung, wobei das Gefäß mit durchbrochener Außenwand versehen ist und der Bergkristall nur an einem Ende pyramidenförmig geschliffen ist,
- Fig. 3: eine der Fig. 2 ähnliche Ausführungsform der erfindungsgemäßen Vorrichtung mit einem pyramidenförmig geschliffenen Kristall, und
- Fig. 4: eine Teillängsschnittansicht einer Wasserauslaßarmatur mit Siebeinsatz und darüber befindlichen Kristallen.
- Fig. 5: eine längsgeschnittene Seitenansicht sowie Querschnitt einer mehrstufigen Pumpe mit Reaktionskammern bzw. -gefäßen zwischen den einzelnen Pumpenstufen.
- Fig. 6: eine schematische Darstellung von hintereinandergeschalteten Pumpen und dazwischen angeordneten Reaktionskammern bzw. -gefäßen.

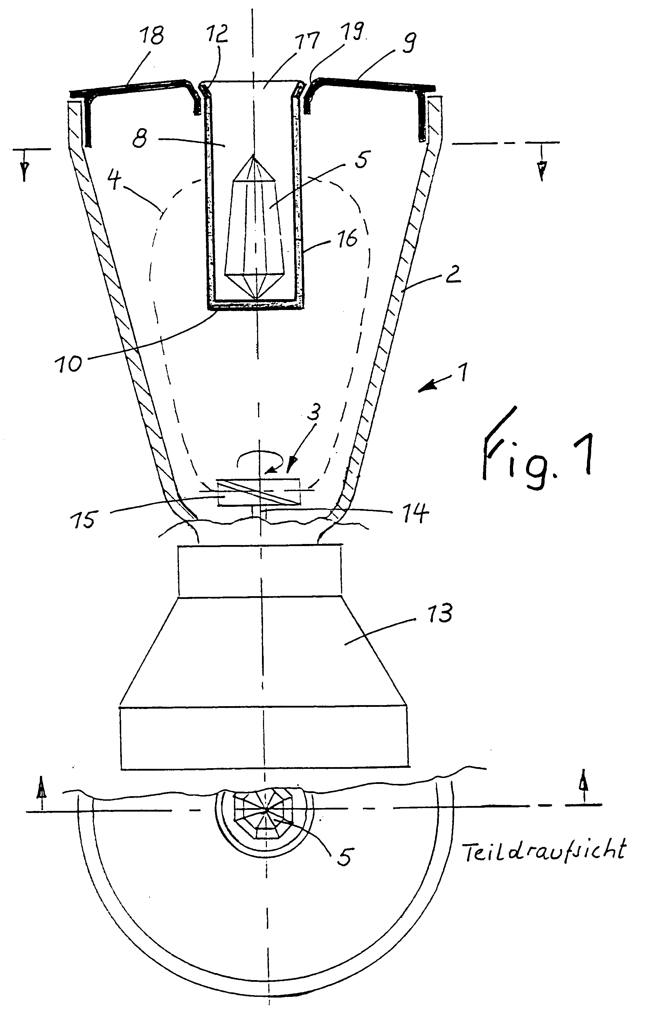

Die in den Fig. 1 bis 3 gezeigte Vorrichtung in Art eines Haushaltsmixgerätes 1, bestehend aus einem das zu behandelnde Wasser aufnehmenden Behälter 2, einem im Boden dieses Behälters angeordneten Rührwerk 3 mit einem Rotor 15 und einer Antriebswelle 14 sowie einem den Elektromotor für den Antrieb der Welle 14 bzw. des Rührwerks aufnehmenden Fuß 13, weist ein zylindrisches Gefäß 8 auf, in dem sich ein fester Kristallkörper in Form eines Bergkristalls 5, 6, 7 befindet.

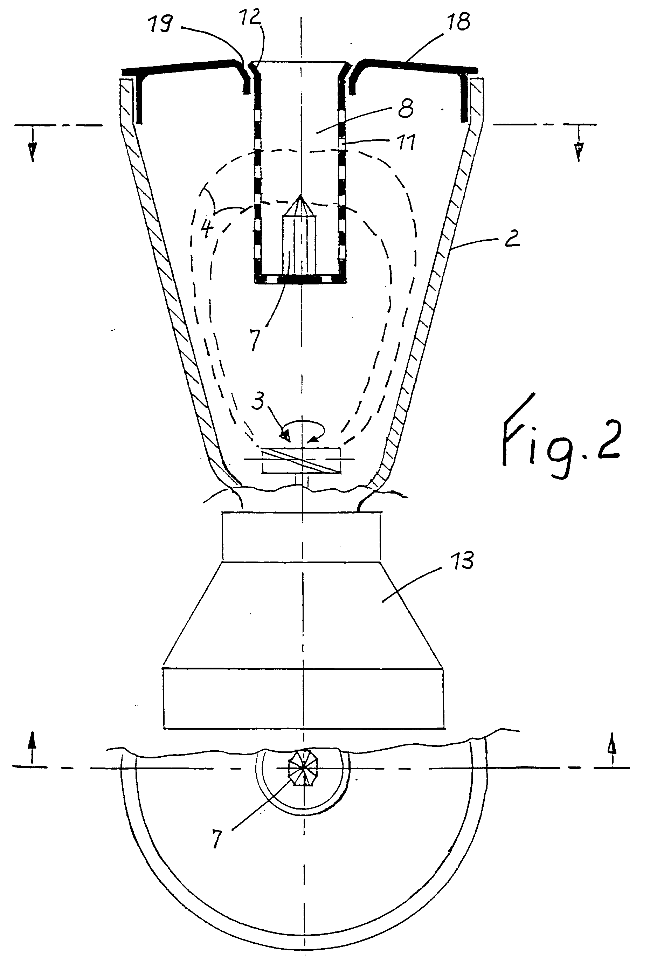

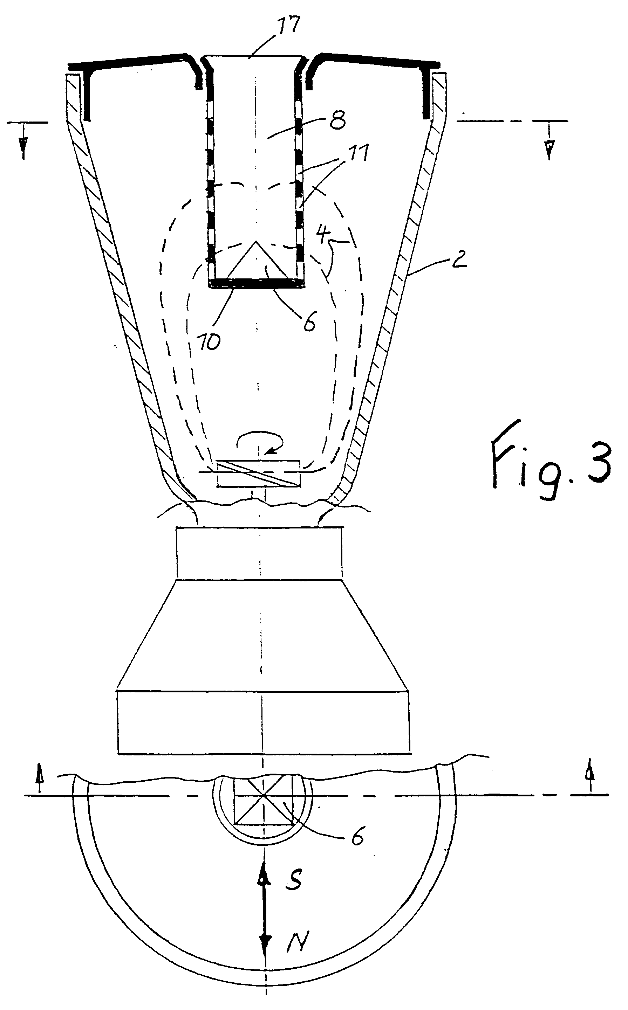

Dieser Kristallkörper ist entlang seiner primären Wachstumsachse geschliffen und weist bei der Ausführungsform nach Fig. 1 an seinen beiden Enden eine pyramidenförmige Zuspitzung auf und nach der Ausführungsform gemäß Fig. 2 nur an seinem oberen Ende eine solche Zuspitzung, während nach der Ausführungsform gemäß Fig. 3 der gesamte Kristall als Pyramide 6 geschliffen ist.

Dieser Bergkristall ist mit seiner Hauptachse parallel zur Längsachse des Gefäßes 8 ausgerichtet, das eine zylindrische Außenwand 16 und einen Boden 10 aufweist, auf dem der Kristall ruht. Die Außenwand 16 ist entweder wasserundurchlässig oder mit Durchbrüchen 11 versehen, so daß das in dem Behälter befindliche Wasser, das durch den Rotor 15 des Rührwerks 3 aufgewirbelt wird und in einer Strömung 4 vom Behälterboden auf der einen Seite aufsteigt und auf der anderen Seite wieder zum Rührwerk abfällt, dabei in das Gefäß eindringen kann, um mit der Oberfläche des Kristalls 5, 6, 7 in innigen Kontakt zu treten. Die Ausführungsform mit wasserundurchlässiger Wand 16 ist besonders für den Einsatz von Globuli, d.h. wasserlöslichen Zuckerkristallen, vorgesehen.

Das Gefäß 8 weist an seinen den Boden 10 gegenüberliegenden Ende eine Öffnung 17 zur Einführung des Kristalls auf, die einen flanschartigen Rand 12 besitzt, der als Auflager zum Aufhängen des Gefäßes 8 in dem abnehmbaren Deckel 18 dient, der zu diesem Zweck in seiner Oberfläche 9 eine mittige Öffnung besitzt, die mit einem flanschartig abgebogenen Öffnungsrand 19 als Auflager für den Rand 12 des Gefäßes 8 versehen ist.

Anstelle des Bergkristalls 5, 6, 7, der als natürlicher Quarz ein Halbedelstein ist, lassen sich auch Edelsteine verwenden, die anstelle eines pyramidenförmigen Zuschliffes der Kristalle auch als Globuli, d.h. als Kugel ausgebildet sind. Auf jeden Fall wird dadurch, daß das Kristallgitter schwingt, auf das den Kristall umströmende Wasser Energie übertragen, was bedeutet, daß die Wassermoleküle ihrerseits in Schwingungen versetzt werden, wodurch eine Energetisierung oder Vitalisierung des Wassers erfolgt, die seine Bekömmlichkeit, was Geschmack und Frische anbelangt, erheblich steigert, so daß man ein so behandeltes Wasser als "lebendiges" Wasser von ausgezeichneter Trinkqualität bezeichnen kann, während das Wasser vor seiner Behandlung in einer solchen Vorrichtung beispielsweise Leitungswasser, sich auf einer relativ niedrigen Energiestufe befindet und im Vergleich zum behandelten Wasser als "tot" bezeichnet werden könnte.

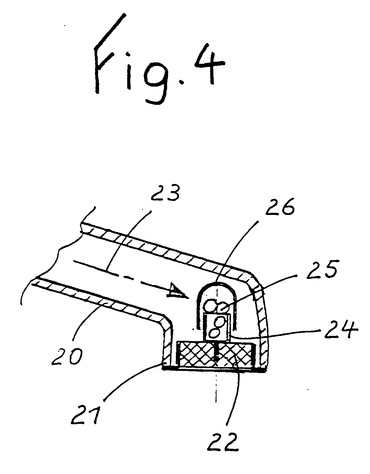

Anstelle der in den Fig. 1 bis 3 gezeigten Vorrichtung, die mit einen Haushaltsmixgerät vergleichbar ist, läßt sich eine Vitalisierung eines relativ toten Wassers im obigen Sinne auch mit einer handelsüblichen Wasserarmatur, wie in Fig. 4 gezeigt, erreichen, deren Wasserauslaufrohr 20 im Auslauf 21 mit einem Siebeinsatz 22 versehen ist, das im Strömungsweg 23 des austretenden Wassers liegt und wenigstens einen Kristallkörper 25 als den Energieinhalt des Wassers erhöhendes Element besitzt. Ein solcher Kristallkörper kann wie bei den Ausführungsformen gemäß den Figuren 1 bis 3 ein geschliffener Quarz oder auch Edelstein sein, der in einem Gehäuse 24 angeordnet ist, welches von einer wasserdurchlässigen Haube 26 abgedeckt ist. Als Kristallkörper können auch Globuli Verwendung finden. Für die Aufnahme von Globuli werden das Gehäuse 24 und die Haube 26 wasserdicht ausgeführt.

Das in Fig. 4 gezeigte Gehäuse 24 mit Haube 26 kann auch in einem dem Auslauf 21 des Wasserauslaufrohrs 20 nachgeschalteten Gefäß untergebracht werden, das in die Wasserarmatur eingeschraubt wird.

Auf diese Weise wird ebenfalls eine Wasserbehandlung im obigen Sinne erreicht, allerdings mit einem geringeren Wirkungsgrad, da die Kontaktzeit des strömenden Wassers an der Oberfläche des oder der Kristalle geringer ist als in Behälter 2.

Die in Fig. 4 gezeigte Ausführungsform hat den Vorteil, daß sie relativ einfach ist und keine elektrische Energie zum Antreiben eines Wasserstromes benötigt.

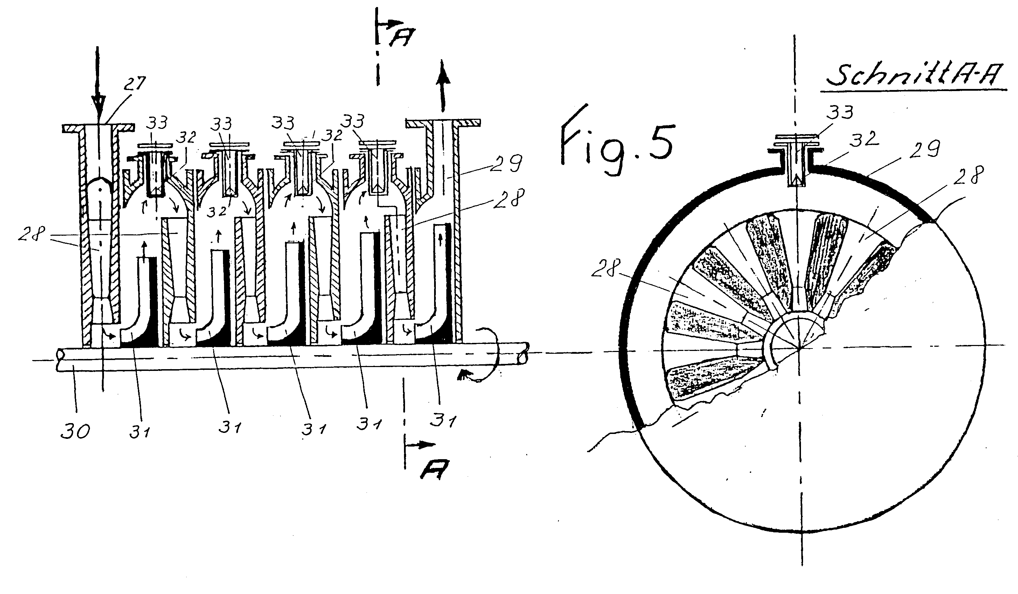

Zur Vitalisierung von großen Wassermengen eignet sich eine mehrstufige Pumpe, wie in Fig. 5 gezeigt, mit sternförmig angeordneten Ansaugkanälen 28 im Pumpengehäuse 29 und einem Wasserzulauf 27. Die Gestaltung der Ansaugkanäle kann nach dem Venturi-Prinzip erfolgen. Die auf der Pumpenwelle 30 angeordneten Laufräder 31 befördern das Wasser von einer Pumpenstufe zur nächsten.

Hierbei werden die mit Kristallen 32 bestückten Reaktionskammern bzw. -gefäße 33 in Gehäuse 29 intensiv mit Wasser durchspült.

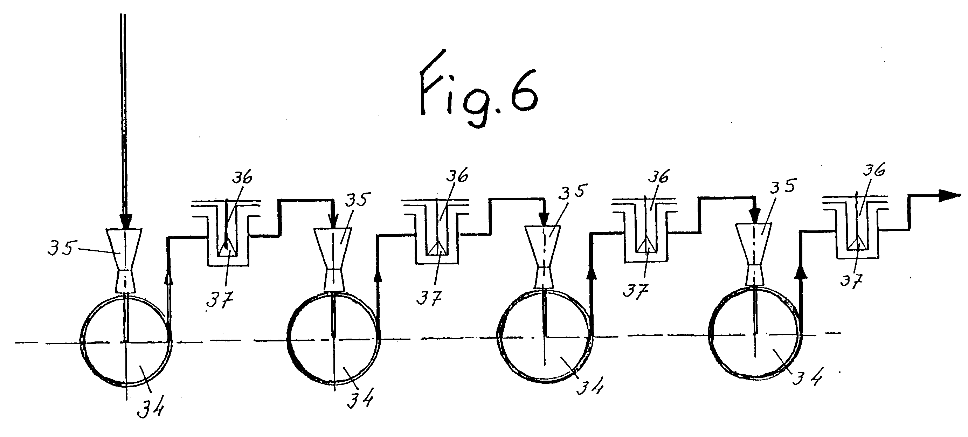

Daß die Vitalisierung von großen Wassermengen auch durch die Hintereinanderschaltung von mehreren Pumpen 34 mit Ansauggehäusen 35 (nach dem Venturi-Prinzip) sowie zwischengeschalteten Reaktionskammern bzw. -gefäßen 36 mit Kristall-Einsätzen 37 möglich ist, zeigt Fig. 6.

## Patentansprüche

1. Vorrichtung zur Reinigung und Vitalisierung von Wässern mit wenigstens einem mit dem zu behandelnden Wasser zu beschickenden Behälter, der mit einem Rührwerk oder einer Kreiselpumpe versehen ist, deren Rotor den Sauerstoffeintrag in das Wasser intensiviert, dadurch **gekennzeichnet,** daß in der von dem Rührwerk (3) oder der Kreiselpumpe im Behälter (2) aufgewirbelten Wasserströmung (4) wenigstens ein den Energieinhalt des Wassers erhöhender, fester Kristallkörper (5, 6, 7) angeordnet ist.

2. Vorrichtung nach Anspruch 1, dadurch **gekennzeichnet,** daß mehrere solchermaßen ausgestattete Behälter hintereinandergeschaltet sind der Art, daß das Wasser nach seiner Behandlung in dem einen Behälter dem folgenden weiteren zuströmt.

3. Vorrichtung nach Anspruch 1 oder 2, dadurch **gekennzeichnet,** daß der feste Körper ein Edelstein oder Halbedelstein ist.

4. Vorrichtung nach einem der Ansprüche 1 bis 3, dadurch **gekennzeichnet,** daß der feste Körper ein Bergkristall (5) ist.

5. Vorrichtung nach Anspruch 1, dadurch **gekennzeichnet,** daß der feste Körper ein reiner, natürlicher Quarz (7) ist, der entlang der primären Wachstumsachse geschliffen ist.

6. Vorrichtung nach einen der Ansprüche 1 bis 5, dadurch **gekennzeichnet,** daß der Kristall pyramidenförmig (6) geschliffen ist.

7. Vorrichtung nach einem der Ansprüche 1 bis 5, dadurch **gekennzeichnet,** daß der feste Kristallkörper aus organischen Kristallen, genannt Globuli, besteht, die in einem wasserdichten Gefäß (8) innerhalb des Behälters (2) angeordnet sind.

8. Vorrichtung nach einem der Ansprüche 1 bis 6, dadurch **gekennzeichnet,** daß der feste Körper (5, 6, 7) innerhalb des Behälters (2) in einem in den Behälter einhängbaren Gefäß (8) angeordnet ist, dessen Wände wasserdurchlässig sind.

9. Vorrichtung nach Anspruch 8, dadurch **gekennzeichnet,** daß das Gefäß (8) eine zylindrische Außenwand (16) aufweist sowie einen den festen Körper (5, 6, 7) aufnehmenden Boden (10) und eine diesem gegenüberliegende Öffnung (17) zur Einführung des festen Körpers, deren Rand (12) als Auflager zum Aufhängen des Gefäßes (8) ausgebildet ist.

10. Vorrichtung nach Anspruch 9, dadurch **gekennzeichnet,** daß der Behälter (2) durch einen abnehmbaren Deckel (18) verschlossen ist, in dem sich eine Mittelöffnung (19) befindet, deren flanschartig abgebogener Öffnungsrand (20) als Auflager für den Rand (12) des Gefäßes (8) dient.

11. Vorrichtung nach einem der Ansprüche 1 bis 10, dadurch **gekennzeichnet,** daß das Rührwerk (3) und der Behälter (2) Teil eines handelsüblichen Haushaltsmixgerätes sind, und daß der Rotor (15) des Rührwerks von einem im Fuße (13) eines solchen Haushaltsmixgerätes angeordneten Elektromotor antreibbar ist.

12. Vorrichtung zur Reinigung und Vitalisierung von Wässern innerhalb einer Wasserarmatur, deren Wasserauslauf mit einem Siebeinsatz versehen ist, dadurch **gekennzeichnet,** daß innerhalb des Auslaufrohres (20) der Armatur und oberhalb des in Auslauf (21) befindlichen Siebeinsatzes (22) im Strömungsweg des Wassers (23) wenigstens ein den Energieinhalt des Wassers erhöhender fester Kristallkörper (25) angeordnet ist.

13. Vorrichtung nach Anspruch 12, dadurch **gekennzeichnet,** daß der feste Körper ein Edelstein oder Halbedelstein ist.

14. Vorrichtung nach Anspruch 12 und 13, dadurch **gekennzeichnet,** daß der feste Körper ein Bergkristall (5) ist.

15. Vorrichtung nach Anspruch 12 bis 14, dadurch **gekennzeichnet,** daß der feste Körper ein reiner, natürlicher Quarz (7) ist, der entlang der primären Wachstumsachse geschliffen ist.

16. Vorrichtung nach Anspruch 12 bis 15, dadurch **gekennzeichnet,** daß der Kristall pyramidenförmig (6) geschliffen ist.

17. Vorrichtung nach einem der Ansprüche 12 bis 16, dadurch **gekennzeichnet,** daß der feste Kristallkörper aus organischen Kristallen, genannt Globuli, besteht, die in einem wasserdichten Gefäß (8) innerhalb des Behälters (2) angeordnet sind.

18. Vorrichtung nach einem der Ansprüche 12 bis 17, dadurch **gekennzeichnet,** daß der oder die Kristalle in einem Gehäuse (24) angeordnet sind, das von einer wasserdurchlässigen Haube (26) abgedeckt ist.

19. Vorrichtung zur Reinigung und Vitalisierung von Wässern mit wenigstens einem mit dem zu behandelnden Wasser zu beschickenden Behälter als Gehäuse einer mehrstufigen Kreiselpumpe, deren Laufräder den Sauerstoffeintrag in das Wasser intensivieren, dadurch **gekennzeichnet,** daß jede Stufe der Kreiselpumpe mit einer wenigstens einen festen Kristallkörper (32) aufnehmenden Reaktionskammer (33) innerhalb des Gehäuses (29) der Kreiselpumpe versehen ist, die von der durch die Pumpe geförderten Wasserströmung bespült wird.

20. Vorrichtung zur Reinigung und Vitalisierung von Wässern mit wenigstens einem mit dem zu behandelnden Wasser zu beschickenden Behälter, dem eine dieses Wasser fördernde Pumpe zugeordnet ist, dadurch **gekennzeichnet,** daß zwischen den einzelnen in Serie geschalteten Pumpen (34) in den Behältern Reaktionskammern (36) zur Aufnahme wenigstens eines festen Kristallkörpers (37) angeordnet sind, die von dem von den Pumpen geförderten Wasser bespült werden.

21. Vorrichtung nach Anspruch 20, dadurch **gekennzeichnet,** daß die Saugseite der Pumpen (34) mit einer Venturidüse (35) versehen ist.
